# EUROPEAN PATENT APPLICATION

(11) **EP 4 427 828 A1**
(43) Date of publication of application: **11.09.2024**
(21) Application number: 23160831.6
(22) Date of filing: 08.03.2023
(51) Int. Cl.: B01D 3/14, B01D 3/38, B01D 3/40, B01D 11/04, C10G 7/08

(54) **A PLANT AND METHOD FOR SEPARATING AND PURIFYING STYRENE FROM A CRUDE MIXTURE COMPRISING STYRENE**

(71) Applicant: Sulzer Management AG, 8401 Winterthur (CH)
(72) Inventor: The designation of the inventor has not yet been filed
(74) Representative: Henkel & Partner mbB

(57) **Abstract**

A plant in particular for separating and purifying styrene from a crude mixture comprising styrene comprises a steam generating unit, a liquid-liquid extraction wash column and a distillation column, wherein the distillation column comprises a top section and a bottom section, wherein at least a part of the bottom section has a smaller cross-sectional area than the top section of the distillation column, wherein the distillation column further comprises an inlet line for feed, an inlet line for extractive solvent, an inlet line for steam being connected with the steam generating unit, an overhead outlet line, a bottom outlet line and a side outlet line being arranged below the overhead outlet line and above the bottom outlet line, wherein
i) the overhead outlet line is directly connected with the liquid-liquid extraction wash column or the overhead outlet line is directly or indirectly connected with a liquid-liquid separator comprising a water outlet line and a hydrocarbon outlet line, wherein the water outlet line is connected with the liquid-liquid extraction wash column, and
ii) the side outlet line directly connected with the liquid-liquid extraction wash column or the side outlet line is directly or indirectly connected with a liquid-liquid separator comprising a water outlet line and a hydrocarbon outlet line, wherein the hydrocarbon outlet line is connected with the liquid-liquid extraction wash column.

## Description

The present invention relates to a plant and method for separating and purifying styrene from a crude mixture comprising styrene.

Styrene is an important building block for polymers, such as polystyrene, acrylonitrile-butadiene-styrene/styrene-acrylonitrile resins, styrene-butadiene copolymer latexes, unsaturated polyester resins, styrene-butadiene rubber elastomers and latices. It is one of the highest volume commodity chemicals traded; over 30% of annual styrene production is traded internationally. Styrene is predominantly produced using benzene and ethylene as raw materials, wherein the benzene is alkylated with the ethylene to ethylbenzene, and wherein the ethylbenzene is converted via a dehydrogenation process or an ethylbenzene/styrene monomer process or via a propylene oxide/styrene monomer process, respectively, into styrene. Typically, styrene plants are located near ethylene crackers due to the gaseous nature of ethylene which makes it relatively difficult to transport as compared to benzene.

Apart from the on-purpose production route via the ethylbenzene/styrene monomer process or via the propylene oxide/styrene monomer process, styrene is also present in hydrocarbon streams, such as pyrolysis gasoline obtained from steam cracking of naphtha, the hydrocarbon fraction obtained from waste polystyrene (thermal or catalytic) pyrolysis, hydrocarbon fraction obtained from various waste plastic (thermal or catalytic) pyrolysis etc. Styrene extraction from these hydrocarbon streams presents an attractive economic opportunity to the operator due to the low feedstock cost. The area of styrene production from waste polystyrene has especially gained mainstream attention due to the plastics recycling issues being encountered in the world presently. Waste plastics pose a serious threat to the environment. However, this separation is technically difficult due to the presence of close boiling molecules and impurities coming from the starting feedstock. For instance, during polystyrene recycling different sorts of waste polystyrene are fed into the catalytic or pyrolysis reactor. Due to the contamination of the waste plastic coupled with production of other close boiler compounds, like benzene, toluene, ethylbenzene, alpha-methyl styrene, cumene, n-propyl benzene etc., produced during the pyrolytic or catalytic step there is a need to have a reliable method to purify this styrene oil to the final ASTM grade styrene specification.

Separating and purifying styrene from a styrene containing crude mixture, such as one being produced with any of the aforementioned processes, is typically performed with an extractive distillation, in which the crude mixture is distilled in the presence of an extractive solvent, which is typically a miscible, comparably high-boiling, relatively non-volatile component. In order to decrease the required temperature for the extractive distillation, often steam is added as stripping agent into the distillation column in addition to the styrene containing crude mixture and in addition to the extractive solvent. The extractive solvent changes the fugacities of appropriate components in the crude mixture, wherein the fugacity is the corrected partial vapor pressure in the mixture. Thereby, the separation of substances, which are only very difficult to separate by a regular distillation due to their close boiling points, is facilitated. These extractive distillation based purification processes are typically performed with two or three columns and are energy intensive as well as requiring a high capital expenditure (CAPEX).

Considering the above, the object underlying the present invention is to provide a plant for separating and purifying styrene from a crude mixture comprising styrene, which has during its operation only a low energy demand, which requires a low CAPEX and which allows to produce a very pure styrene composition.

In accordance with the present invention, this object is satisfied by providing a plant in particular for separating and purifying styrene from a crude mixture comprising styrene, wherein the plant comprises a steam generating unit, a liquid-liquid extraction wash column and a distillation column, wherein the distillation column comprises a top section and a bottom section, wherein at least a part of the bottom section has a smaller cross-sectional area than the top section of the distillation column, wherein the distillation column further comprises an inlet line for feed, an inlet line for extractive solvent, an inlet line for steam being connected with the steam generating unit, an overhead outlet line, a bottom outlet line and a side outlet line being arranged below the overhead outlet line and above the bottom outlet line, wherein
i) the overhead outlet line is directly connected with the liquid-liquid extraction wash column or the overhead outlet line is directly or indirectly connected with a liquid-liquid separator comprising a water outlet line and a hydrocarbon outlet line, wherein the water outlet line is connected with the liquid-liquid extraction wash column, and
ii) the side outlet line is directly connected with the liquid-liquid extraction wash column or the side outlet line is directly or indirectly connected with a liquid-liquid separator comprising a water outlet line and a hydrocarbon outlet line, wherein the hydrocarbon outlet line is connected with the liquid-liquid extraction wash column.

This solution bases on the surprising finding that by separating and purifying styrene from a crude mixture comprising styrene in the aforementioned plant, which is in particular characterized in that a distillation column comprising a side outlet in addition to an overhead outlet and a bottom outlet is used, wherein both, the overhead outlet as well as the side outlet are connected, either directly or preferably indirectly via a condenser and a liquid-liquid separator, with a liquid-liquid extraction wash column, and wherein the distillation column has a bottom section, of which at least a part has a smaller cross-sectional area than the top section of the distillation column, the crude mixture may be purified with a particular low energy demand and also with a particular low CAPEX. While the reason for the particular low energy demand is, among others, that the aforementioned plant has during its operation only a comparable low steam consumption, the reason for the particular low CAPEX is that the plant only requires one distillation column. Moreover, the plant in accordance with the present invention only requires a minimum of plot space, all the more because a further distillation column for recovering the extractive solvent from a mixture of extractive solvent and styrene in addition to the aforementioned distillation column is not necessary. Thereby, the total distillation column height, i.e. the sum of the heights of all distillation columns of the plant, can be reduced. Moreover, the plant in accordance with the present invention surprisingly allows to produce a very pure styrene composition, namely a composition having a styrene content of at least 95% to 99% by weight.

In accordance with the present invention, the distillation column comprises a top section and a bottom section. This means that the top section is the section, which extends- seen in the length direction of the distillation column, which is the vertical direction - from the uppermost point of the distillation column downwardly, whereas the bottom section is the section extending from the lowermost point of the distillation column upwardly. It is in particular preferred that the distillation column consists - seen from its top to its bottom - of the top section and of the bottom section, i.e. that it does not comprise any further section, i.e. that the top section is directly connected with the bottom section.

At least a part of the bottom section has a smaller cross-sectional area than the top section of the distillation column, which means that - if the top section has over its whole height the same (i.e. constant) cross-sectional area - at least a subsection of the bottom section has a smaller cross-sectional area than the cross-sectional area of the top section of the distillation column. If the top section has over its whole height not a constant, but a varying cross-sectional area, then at least a subsection of the bottom section has a smaller cross-sectional area than the average cross-sectional area of the top section of the distillation column. If both, the top section as well as the bottom section have over their whole height not a constant, but a varying cross-sectional area, then at least a subsection of the bottom section has a smaller average cross-sectional area than the average cross-sectional area of the top section of the distillation column.

In accordance with the present invention, the overhead outlet line is directly connected with the liquid-liquid extraction wash column or the overhead outlet line is directly or indirectly connected with a liquid-liquid separator comprising a water outlet line and a hydrocarbon outlet line, wherein the water outlet line is connected with the liquid-liquid extraction wash column. This means that the overhead outlet line of the distillation column is directly connected with the liquid-liquid extraction wash column or the overhead outlet line of the distillation column is directly connected with the liquid-liquid separator comprising a water outlet line and a hydrocarbon outlet line or that the overhead outlet line of the distillation column is indirectly connected with the liquid-liquid separator comprising a water outlet line and a hydrocarbon outlet line. Indirectly connected means that between the overhead outlet line of the distillation column and the inlet line of the liquid-liquid separator one or more further devices, such as a condenser, may be arranged. Likewise thereto, the water outlet line of the liquid-liquid extraction wash column being connected with the overhead outlet line may be directly or indirectly connected with the (inlet line of the) liquid-liquid extraction wash column. The same is valid for the side outlet line, i.e. the side outlet line of the distillation column may be directly connected with the liquid-liquid extraction wash column or the side outlet line of the distillation column may be directly connected with the liquid-liquid separator comprising a water outlet line and a hydrocarbon outlet line or the side outlet line of the distillation column may be indirectly connected with the liquid-liquid separator comprising a water outlet line and a hydrocarbon outlet line. Again, indirectly connected means that between the side outlet line of the distillation column and the inlet line of the liquid-liquid separator one or more further devices, such as a condenser, may be arranged. Likewise thereto, the hydrocarbon outlet line of the liquid-liquid extraction wash column being connected with the side outlet line may be directly or indirectly connected with the (inlet line of the) liquid-liquid extraction wash column.

Preferably, the overhead outlet line of the distillation column is indirectly connected with a liquid-liquid separator comprising a water outlet line and a hydrocarbon outlet line. Accordingly, it is preferred that the plant further comprises an overhead condenser, which comprises an inlet line and an outlet line, and the plant further comprises a liquid-liquid separator comprising an inlet line, a water outlet line and a hydrocarbon outlet line, wherein the overhead outlet line of the distillation column is connected with the inlet line of the overhead condenser, wherein the outlet line of the overhead condenser is connected with the inlet line of the liquid-liquid separator and wherein the water outlet line of the liquid-liquid separator is connected with the liquid-liquid extraction wash column. The water outlet line of the liquid-liquid separator may be directly or indirectly connected with the liquid-liquid extraction wash column and preferably the water outlet line of the liquid-liquid separator is directly connected with the liquid-liquid extraction wash column.

In a further development of the idea of the present invention, it is suggested that the hydrocarbon outlet line of the liquid-liquid separator being connected with the overhead outlet line splits into a discharge line and into a recycle line being connected with the top section of the distillation column. During the operation of the plant, for instance a Ca-raffinate may be withdrawn via the discharge line.

In accordance with a further preferred embodiment of the present invention, the side outlet line of the distillation column is indirectly connected with a liquid-liquid separator comprising a water outlet line and a hydrocarbon outlet line. Consequently, it is preferred that the plant further comprises a side condenser, which comprises an inlet line and an outlet line, and the plant further comprises a liquid-liquid separator comprising an inlet line, a water outlet line and a hydrocarbon outlet line, wherein the side outlet line of the distillation column is connected with the inlet line of the side condenser, wherein the outlet line of the side condenser is connected with the inlet line of the liquid-liquid separator and wherein the hydrocarbon outlet line of the liquid-liquid separator is connected with the liquid-liquid extraction wash column. The hydrocarbon outlet line of the liquid-liquid separator may be directly or indirectly connected with the liquid-liquid extraction wash column and preferably the hydrocarbon outlet line of the liquid-liquid separator is directly connected with the liquid-liquid extraction wash column.

Moreover, it is preferred that the water outlet line of the liquid-liquid separator being connected with the side outlet of the distillation column leads into the steam generating unit.

The present invention is not particularly limited concerning the locations, at which the overhead outlet line or the water outlet line of the liquid-liquid separator being connected with the overhead outlet line i) and the side outlet line or the hydrocarbon outlet line of the liquid-liquid separator being connected with the side outlet line ii) are connected with the liquid-liquid extraction wash column. For instance, both lines i) and ii) may be connected with the same end, i.e. top end or bottom end, or with a middle portion of the liquid-liquid extraction wash column or both lines i) and ii) may be connected with the different ones of the top end, the bottom end and the middle portion of the liquid-liquid extraction wash column. Good results are in particular obtained, when the overhead outlet line or the water outlet line of the liquid-liquid separator being connected with the overhead outlet line i) is connected with an end of the liquid-liquid extraction wash column and the side outlet line or the hydrocarbon outlet line of the liquid-liquid separator being connected with the side outlet line ii) is connected with an opposite end of the liquid-liquid extraction wash column, i.e. that during the operation of the plant both streams are led in counter-current direction through the liquid-liquid extraction wash column. Most preferably, the overhead outlet line or the water outlet line i) is connected with the upper portion of the liquid-liquid extraction wash column, and the side outlet line or the hydrocarbon outlet line ii) is connected with the lower portion of the liquid-liquid extraction wash column.

In addition, it is preferred that the liquid-liquid extraction wash column further comprises an outlet line for purified styrene and an outlet line for a mixture of water and extractive solvent. Preferably, the outlet line for the mixture of water and extractive solvent leads into the steam generating unit.

In a further development of the idea of the present invention, it is proposed that the outlet line for purified styrene is arranged with one end, i.e. top end or bottom end, of the liquid-liquid extraction wash column and the outlet line for a mixture of water and extractive solvent is arranged at the opposite end of the liquid-liquid extraction wash column. Most preferably, the outlet line for purified styrene is arranged at the top of the liquid-liquid extraction wash column and the outlet line for a mixture of water and extractive solvent is arranged at the bottom of the liquid-liquid extraction wash column.

In accordance with the present invention, at least a part of the bottom section of the distillation column has a smaller cross-sectional area than the top section of the distillation column. Preferably, the cross-sectional area of the at least part of the bottom section of the distillation column is 10 to 99%, more preferably 20 to 95%, yet more preferably 30 to 90% and most preferably 40 to 60% of the cross-sectional area of the top section of the distillation column. Moreover, it is preferred that the top section of the distillation column has, seen over its length, i.e. along the vertical axis or length axis of the distillation column, respectively, an at least essentially constant cross-sectional area. Essentially constant cross-sectional area means in this connection that the difference between the maximal cross-sectional area and the minimal cross-sectional area along the vertical axis is less than 10%, preferably less than 5%, more preferably less than 1% and most preferably 0%. If the cross-sectional area of the at least part of the bottom section of the distillation column having a smaller cross-sectional area than the top section of the distillation column should be not constant over its length, then preferably the average cross-sectional area of the at least part of the bottom section of the distillation column is 10 to 99%, preferably 20 to 95%, more preferably 30 to 90% and most preferably 40 to 60% of the cross-sectional area of the top section, if its cross-sectional area is constant over its length, or of the average cross-sectional area of the top section, if its cross-sectional area is not constant over its length. For instance, the (average) cross-sectional area of the smaller part of the bottom section is 30 to 70% and preferably 40 to 60% of the (average) cross-sectional area of the top section of the distillation column. In an alternative embodiment, it is preferred that the (average) cross-sectional area of the smaller of the bottom section is 60 to 95% and preferably 70 to 85% of the (average) cross-sectional area of the top section of distillation column.

The bottom section of the distillation column may comprise, seen in the direction from the top to the bottom of the distillation column, a first upper subsection, which has a smaller cross-sectional area than the top section, and a second lower subsection, which has a larger or smaller cross-sectional area than the first upper subsection of the bottom section of the distillation column. Preferably, the first upper subsection of the bottom section of the distillation column has an at least essentially constant cross-sectional area over its length, which is 10 to 99%, more preferably 20 to 95%, still more preferably 30 to 90% and most preferably 40 to 60% of the cross-sectional area of the top section. The second lower subsection of the bottom section of the distillation column preferably has a domed-shape. It is preferred in this embodiment that the bottom section does not comprise any further subsection in addition to the first upper subsection and the second lower subsection.

Moreover, it is possible, even if less preferred that the cross-sectional area of the first upper subsection of the bottom section of the distillation column varies over the length of the first upper subsection. The variation of the cross-sectional area over the length of the first upper subsection may be up to 10% meaning that the difference between the maximal cross-sectional area and the minimal cross-sectional area along the vertical axis of the first upper subsection may be up to 10%. In this case, it is preferred that the average cross-sectional area of the first upper subsection of the bottom section is 10 to 99%, preferably 20 to 95%, more preferably 30 to 90% and most preferably 40 to 60% of the average cross-sectional area of the top section.

In accordance with a particular preferred embodiment of the present invention, the bottom section of the distillation column comprises, seen in the direction from the top to the bottom of the distillation column, a first upper subsection, a second middle subsection and a third lower subsection. Preferably, the second middle subsection has a smaller cross-sectional area than the top section. More preferably, the second middle subsection of the bottom section of the distillation column has an at least essentially constant cross-sectional area over its length, which is 10 to 99%, more preferably 20 to 95%, still more preferably 30 to 90% and most preferably 40 to 60% of the cross-sectional area of the top section. The third lower subsection of the bottom section of the distillation column preferably has a domed-shape, whereas it is preferred that the first upper subsection tapers, seen in the direction from the top to the bottom of the first upper subsection, from the cross-sectional area of the top section to the cross-sectional area of the second middle subsection of the bottom section of the distillation column. It is preferred in this embodiment that the bottom section does not comprise any further subsection in addition to the first upper subsection, the second middle subsection and the third lower subsection.

In a further development of the idea of the present invention, it is proposed that the distillation column has a circular cross-section, wherein the top of the top section of the distillation column is dome-shaped, and wherein the diameter of the subsection of the top section being below the dome-shaped top is over the length of the top section constant.

Good results are in particular obtained, when the inlet line for feed, the inlet line for extractive solvent and the side outlet line are connected with the top section of the distillation column, wherein the inlet line for extractive solvent is connected with a location of the top section being above the location of the top section, with which the line for feed is connected, wherein the line for feed is connected with a location of the top section being above the location of the top section, with which the side outlet line is connected, and wherein the inlet line for steam is connected with the bottom section of the distillation column.

In a further development of the idea of the present invention, it is suggested that the plant further comprises a reboiler, wherein the lower portion of the top section of the distillation column comprises an outlet line and an inlet line, both being connected with a recycle line leading from the outlet line to the inlet line, wherein the recycle line is connected with the reboiler.

For instance, in the aforementioned embodiment each of the outlet and of the inlet of the lower portion of the top section of the distillation column is arranged at a position being located, seen from the bottom to the top of the top section of the distillation column, between 0 and 25% and preferably between 1 and 15% of the distance from the bottom to the top of the top section of the distillation column.

In accordance with a further preferred embodiment of the present invention, a (further) reboiler may be arranged within the bottom section. It is preferred in this embodiment that the reboiler is arranged at a position being located, seen from the bottom to the top of the bottom section of the distillation column, between 5 and 50% and preferably between 10 and 30% of the distance from the bottom to the top of the bottom section of the distillation column.

In accordance with an alternative preferred embodiment of the present invention, the bottom section of the distillation column does not comprise a reboiler and is not connected with a line being connected with a reboiler.

In a further development of the idea of the present invention, it is proposed that the steam generating unit comprises a steam generator and a solvent regenerator. While the steam generator comprises an inlet being connected with a water line and an outlet for steam, the solvent regenerator comprises an inlet being connected with the outlet for steam of the steam generator, a further inlet line being connected with a solvent line being connected with the bottom outlet line of the distillation column and an outlet being connected with the inlet line for steam of the distillation column. The water line of the steam generator is preferably connected with the outlet line for a mixture of water and extractive solvent of the liquid-liquid extraction wash column and/or with the water outlet line of the liquid-liquid separator being connected with the side outlet line of the distillation column. Most preferably, the water line of the steam generator is preferably connected with the outlet line for a mixture of water and extractive solvent of the liquid-liquid extraction wash column and with the water outlet line of the liquid-liquid separator being connected with the side outlet line of the distillation column.

In accordance with a particular preferred embodiment of the present invention, the plant only comprises the aforementioned distillation and no further distillation column. In other words, it is particularly preferred that the plant consists of the distillation column, the liquid-liquid extractions wash column and the steam generating unit.

In accordance with a further particular preferred embodiment of the present invention, neither the side outlet line nor the condenser being connected with the side outlet line nor the liquid-liquid separator being connected with the side outlet line or with the condenser is (directly) connected with a reflux line leading back into the distillation column.

In a further aspect, the present invention relates to a method for separating and purifying styrene from a crude mixture comprising styrene comprising the steps of:
a) feeding a crude hydrocarbon composition containing styrene via the inlet line for feed, feeding an extractive solvent via the inlet line for extractive solvent and feeding an extractive solvent and water steam comprising mixture via the inlet line for steam into the distillation column of a plant in accordance with any of the preceding claims,
b) distilling the crude hydrocarbon composition, the extractive solvent and the water steam in the distillation column,
c) withdrawing an overhead stream via the overhead outlet line of the distillation column,
d) withdrawing a styrene enriched composition via the side outlet line of the distillation column,
e) leading the overhead stream directly or an aqueous stream being obtained by subjecting the overhead stream to a condensation and thereafter subjecting the condensed overhead stream to a liquid-liquid separation so as to separate it into the aqueous stream and into a hydrocarbon stream, into the liquid-liquid extraction wash column,
f) leading the styrene enriched composition directly or a hydrocarbon stream being obtained by subjecting the styrene enriched composition to a condensation and thereafter subjecting the condensed stream to a liquid-liquid separation so as to separate it into the aqueous stream and into a hydrocarbon stream, into the liquid-liquid extraction wash column, and
g) withdrawing from the liquid-liquid extraction wash column a pure styrene stream.

During the operation of the distillation column, a mixture comprising water steam and extractive solvent is fed via the inlet line for steam into the distillation column. However, for the ease of nomenclature this inlet line is shortly denoted in this application as inlet line for steam.

Preferably, the crude hydrocarbon composition contains 10 to 80% by weight, more preferably 30 to 60% by weight and most preferably 40 to 50% by weight of styrene. For instance, the crude hydrocarbon composition is a hydrocarbon C8 cut or a selectively hydrotreated hydrocarbon C8 cut of pyrolysis gasoline obtained from steam cracking of naphtha, the hydrocarbon fraction obtained from waste polystyrene (thermal or catalytic) pyrolysis, unsaturated gasoline obtained from various waste plastic (thermal or catalytic) pyrolysis etc.

Good results are in particular obtained, when the extractive solvent is a sulfone, such as a cyclic or acyclic sulfone, such as sulfolane.

In a further development of the idea of the present invention, it is suggested that the distillation is performed at a temperature of 40 to 140°C and at a pressure of 0.02 to 0.03 MPa and preferably at a temperature of 60 to 125°C and at a pressure of 0.005 to 0.015 MPa.

The ratio of extractive solvent based on the sum of extractive solvent and water steam in the mixture used in step a), which is generated in the steam generating unit, is preferably 80 to 95% by weight and more preferably 85 to 95% by weight. It is further preferred that the ratio of crude hydrocarbon composition based on the sum of crude hydrocarbon composition, extractive solvent and mixture comprising extractive solvent and water steam fed in step a) into the distillation column is 10 to 30% by weight and more preferably 15 to 20% by weight.

Subsequently, the present invention is described by means of illustrative, but not limiting figures, in which:

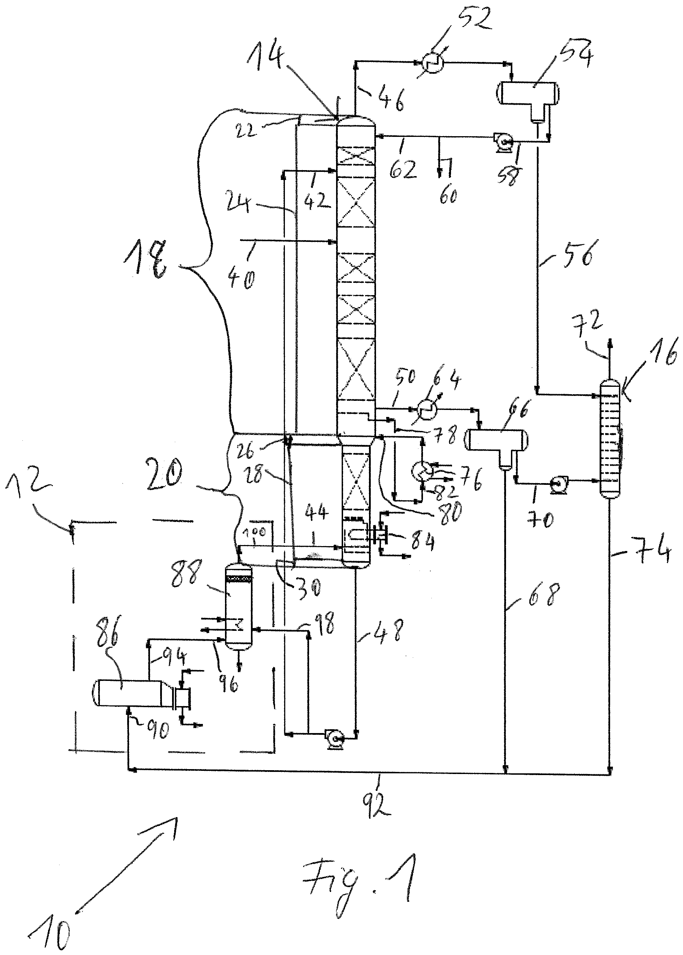

- Fig. 1: shows a schematic view of the plant for separating and purifying styrene from a crude mixture comprising styrene in accordance with one embodiment of the present invention.

The plant 10 for separating and purifying styrene from a crude mixture comprising styrene shown in figure 1 comprises a steam generating unit 12, a distillation column 14 and a liquid-liquid extraction wash column 16. The distillation column 14 is subdivided into a top section 18 and into a bottom section 20. Both, the top of the top section 18 and the bottom of the bottom section 20 of the distillation column 14 are dome-shaped. More specifically, the top section of the distillation column 14 comprises a first upper dome-shaped subsection 22 and a second lower subsection 24. In turn, the bottom section 20 of the distillation column 14 comprises a first upper subsection 26, below the first upper subsection 26 a second middle subsection 28 and below the second middle subsection 28 a third lower dome-shaped subsection 30. The second lower subsection 24 of the top section 18 of the distillation column 14 has, seen over its length, a constant cross-sectional area and the second middle subsection 28 of the bottom section 20 of the distillation column 14 has, seen over its length, a constant cross-sectional area, wherein the cross-sectional area of the second middle subsection 28 of the bottom section 20 of the distillation column 14 is about 50% of the cross-sectional area of the second lower subsection 24 of the top section 18 of the distillation column 14. In other words, the diameter of the second middle subsection 28 of the bottom section 20 of the distillation column 14 is about 70% of the diameter of the second lower subsection 24 of the top section 18 of the distillation column 14. The first upper subsection 26 of the bottom section 20 of the distillation column 14 tapers along its length axis, seen from the top to the bottom, from the diameter of the second lower subsection 24 of the top section 18 to the diameter of the second middle subsection 28 of the bottom section 20 of the distillation column 14.

The distillation column 14 further comprises an inlet line 40 for feed leading into the top section 18, an inlet line 42 for extractive solvent leading into the top section 18 at a position above the position where the inlet line 40 for feed leads into the top section 18, an inlet line 44 for steam being connected with the steam generating unit 12, an overhead outlet line 46, a bottom outlet line 48 and a side outlet line 50 being connected with the lower portion of the second lower subsection 24 of the top section 18 of the distillation column 14. Furthermore, an overhead condenser 52 and a liquid-liquid separator 54 are provided, wherein the overhead outlet line 46 is connected with the overhead condenser 52 and downstream thereof with the liquid-liquid separator 54. The liquid-liquid separator 54 is connected with a water line 56 and is connected with a hydrocarbon line 58, wherein the water line 56 leads into the liquid-liquid extraction wash column 16 and the hydrocarbon line 58 splits into a discharge line 60 and into a recycle line 62 being connected with the top section 18 of the distillation column 14. In addition, a side condenser 64 and a further liquid-liquid separator 66 are provided, wherein the side outlet line 50 is connected with the side condenser 64 and downstream thereof with the liquid-liquid separator 66. Also, the liquid-liquid separator 66 is connected with a water line 68 and is connected with a hydrocarbon line 70, wherein the water line 68 leads into the steam generating unit 12 and the hydrocarbon line 70 leads into the liquid-liquid extraction wash column 16. Furthermore, the plant 10 comprises a first reboiler 76, wherein the lower portion of the top section 18 of the distillation column 14 comprises an outlet line 78 and in inlet line 80, both being connected with a recycle line 82 leading from the outlet line 78 to the inlet line 80, wherein the recycle line 82 is connected with the first reboiler 76. A second reboiler 84 is arranged within the second middle subsection 28 of the bottom section 20 of the distillation column 14. This second reboiler 84 allows a particular efficient and complete stripping of the crude mixture and requires only a minimum amount of internals, such as structured packings, in the distillation column 14.

The liquid-liquid extraction wash column 16 further comprises an upper outlet line 72 for purified styrene and a lower outlet line 74 for a mixture of water and extractive solvent.

Finally, the steam generating unit 12 comprises a steam generator 86 and a solvent regenerator 88. The steam generator 86 comprises an inlet 90 being connected with a water line 92, into which the two water lines 68, 74 lead, as well as an outlet line 94 for steam. The solvent regenerator 88 comprises an inlet 96 being connected with the outlet line 94 for steam of the steam generator 86, further comprises an inlet line 98 being connected with the solvent line 98 being connected with the bottom outlet line 48 of the distillation column 14 and further comprises an outlet 100 being connected with the inlet line 44 for steam of the distillation column 14.

During the operation, crude mixture containing styrene, for instance a C8 cut feed, is fed via the inlet line 40 into the distillation column 14, whereas extractive solvent is fed via the inlet line 42 and a mixture of (water) steam and extractive solvent is fed via the inlet line 44 into the distillation column 14. The overhead stream comprising small amounts of non-aromatic hydrocarbons, of toluene, of mixed xylenes and of styrene as well as high amounts of water and ethylbenzene, is led through the overhead condenser 52 and liquid-liquid separator 54, in which the overhead stream is condensed and separated into an aqueous stream and into a hydrocarbon stream. While the aqueous stream is led via line 56 into the liquid-liquid extraction wash column 16, the hydrocarbon stream is partly recycled via the recycle line 62 into the distillation column 14, whereas the rest thereof is withdrawn from the plant for instance as C8 raffinate via line 60. Via the bottom line 48, regenerated extractive solvent is withdrawn, which is partly led into the top section 18 of the distillation column 14 via the inlet line 42, whereas the rest thereof is led via the solvent line 98 into the solvent regenerator 88. A styrene enriched stream is withdrawn via the side outlet line 50 from the lower portion of the top section 18 of the distillation column 14 and is condensed in the side condenser 64 and separated in the liquid-liquid separator 66 into an aqueous stream and into a hydrocarbon stream. While the aqueous stream is led via lines 68, 92 into the steam generator 86, the hydrocarbon stream led into the liquid-liquid extraction wash column 16. In the liquid-liquid extraction wash column 16, the styrene enriched and extractive solvent containing hydrocarbon stream being obtained in the liquid-liquid separator 66 is contacted in counter-current direction with the aqueous stream obtained in the liquid-liquid separator 54. Thereby, extractive solvent contained in the styrene enriched and extractive solvent containing hydrocarbon stream being obtained in the liquid-liquid separator 66 is removed therefrom, so that pure styrene is obtained, which is withdrawn from the liquid-liquid extraction wash column 16 via the outlet line 72. Moreover, thereby a mixture of water and extractive solvent is obtained, which is withdrawn from the liquid-liquid extraction wash column 16 via the outlet line 74 and is led via line 92 into the steam generator 86. The water is evaporated in the steam generator 86 into steam and then mixed in the solvent regenerator 88 with solvent, before the so produced mixture of water steam and solvent is fed via line 44 into the bottom section 20 of the distillation column 14.

### Reference Numerals

- 10: Plant
- 12: Steam generating unit
- 14: Distillation column
- 16: Liquid-liquid extraction wash column
- 18: Top section of the distillation column
- 20: Bottom section of the distillation column
- 22: First upper subsection of the top section of the distillation column
- 24: Second lower subsection of the top section of the distillation column
- 26: First upper subsection of the bottom section of the distillation column
- 28: Second middle subsection of the bottom section of the distillation column
- 30: Third lower subsection of the bottom section of the distillation column
- 40: Inlet line for feed
- 42: Inlet line for extractive solvent
- 44: Inlet line for steam
- 46: Overhead outlet line
- 48: Bottom outlet line
- 50: Side outlet line
- 52: Overhead condenser
- 54: Liquid-liquid separator
- 56: Water line
- 58: Hydrocarbon line
- 60: Discharge line
- 62: Recycle line
- 64: Side condenser
- 66: Liquid-liquid separator
- 68: Water line
- 70: Hydrocarbon line
- 72: Upper outlet line for pure styrene of the liquid-liquid extraction wash column
- 74: Lower outlet line of the liquid-liquid extraction wash column
- 76: First reboiler
- 78: Outlet line
- 80: Inlet line
- 82: Recycle line
- 84: Second reboiler
- 86: Steam generator
- 88: Solvent regenerator
- 90: Inlet of steam generator
- 92: Water line
- 94: Outlet line for steam
- 96: Inlet of solvent regenerator
- 98: Solvent line
- 100: Outlet of solvent regenerator

## Claims

1. A plant in particular for separating and purifying styrene from a crude mixture comprising styrene, wherein the plant comprises a steam generating unit, a liquid-liquid extraction wash column and a distillation column, wherein the distillation column comprises a top section and a bottom section, wherein at least a part of the bottom section has a smaller cross-sectional area than the top section of the distillation column, wherein the distillation column further comprises an inlet line for feed, an inlet line for extractive solvent, an inlet line for steam being connected with the steam generating unit, an overhead outlet line, a bottom outlet line and a side outlet line being arranged below the overhead outlet line and above the bottom outlet line, wherein
i) the overhead outlet line is directly connected with the liquid-liquid extraction wash column or the overhead outlet line is directly or indirectly connected with a liquid-liquid separator comprising a water outlet line and a hydrocarbon outlet line, wherein the water outlet line is connected with the liquid-liquid extraction wash column, and
ii) the side outlet line is directly connected with the liquid-liquid extraction wash column or the side outlet line is directly or indirectly connected with a liquid-liquid separator comprising a water outlet line and a hydrocarbon outlet line, wherein the hydrocarbon outlet line is connected with the liquid-liquid extraction wash column.

2. The plant in accordance with claim 1, which comprises an overhead condenser comprising an inlet line and an outlet line and a liquid-liquid separator comprising an inlet line, a water outlet line and a hydrocarbon outlet line, wherein the overhead outlet line of the distillation column is connected with the inlet line of the overhead condenser, wherein the outlet line of the overhead condenser is connected with the inlet line of the liquid-liquid separator and wherein the water outlet line of the liquid-liquid separator is connected with the liquid-liquid extraction wash column, wherein preferably the hydrocarbon outlet line of the liquid-liquid separator splits into a discharge line and into a recycle line being connected with the top section of the distillation column.

3. The plant in accordance with claim 1 or 2, which comprises a side condenser comprising an inlet line and an outlet line and a liquid-liquid separator comprising an inlet line, a water outlet line and a hydrocarbon outlet line, wherein the side outlet line of the distillation column is connected with the inlet line of the side condenser, wherein the outlet line of the side condenser is connected with the inlet line of the liquid-liquid separator and wherein the hydrocarbon outlet line of the liquid-liquid separator is connected with the liquid-liquid extraction wash column.

4. The plant in accordance with claim 3, wherein the water outlet line of the liquid-liquid separator leads into the steam generating unit.

5. The plant in accordance with any of the preceding claims, wherein the overhead outlet line or the water outlet line of the liquid-liquid separator being connected with the overhead outlet line i) is connected with an end of the liquid-liquid extraction wash column and the side outlet line or the hydrocarbon outlet line of the liquid-liquid separator being connected with the side outlet line ii) is connected with an opposite end of the liquid-liquid extraction wash column, wherein preferably the overhead outlet line or the water outlet line i) is connected with the upper portion of the liquid-liquid extraction wash column, and wherein the side outlet line or the hydrocarbon outlet line ii) is connected with the lower portion of the liquid-liquid extraction wash column.

6. The plant in accordance with any of the preceding claims, wherein the liquid-liquid extraction wash column further comprises an outlet line for purified styrene and an outlet line for a mixture of water and extractive solvent, wherein the outlet line for the mixture of water and extractive solvent leads into the steam generating unit.

7. The plant in accordance with any of the preceding claims, wherein the cross-sectional area of the at least part of the bottom section of the distillation column is 10 to 99%, preferably 20 to 95%, more preferably 30 to 90% and most preferably 40 to 60% of the cross-sectional area of the top section.

8. The plant in accordance with any of the preceding claims, wherein the bottom section of the distillation column comprises, seen in the direction from the top to the bottom of the distillation column, a first upper subsection and a second lower subsection, wherein the first upper subsection is above the second lower subsection, wherein the cross-sectional area of the first upper subsection of the bottom section is 10 to 99%, preferably 20 to 95%, more preferably 30 to 90% and most preferably 40 to 60% of the cross-sectional area of the top section, wherein preferably the second lower subsection of the bottom section of the distillation column is dome-shaped and forms the bottom.

9. The plant in accordance with any of claims 1 to 7, wherein the bottom section of the distillation column comprises, seen in the direction from the top to the bottom of the distillation column, a first upper subsection, below the first subsection a second middle subsection and below the second middle subsection a third lower subsection forming the bottom of the distillation column, wherein the cross-sectional area of the second middle subsection of the bottom section is 10 to 99%, preferably 20 to 95%, more preferably 30 to 90% and most preferably 40 to 60% of the cross-sectional area of the top section, and wherein the first upper subsection of the bottom section tapers, seen in the direction from the top to the bottom of the first upper subsection, from the cross-sectional area of the top section of the distillation column to the cross-sectional area of the second middle subsection of the bottom section of the distillation column.

10. The plant in accordance with any of the preceding claims, wherein the inlet line for feed, the inlet line for extractive solvent and the side outlet line are connected with the top section of the distillation column, wherein the inlet line for extractive solvent is connected with a location of the top section being above the location of the top section, with which the line for feed is connected, wherein the line for feed is connected with a location of the top section being above the location of the top section, with which the side outlet line is connected, and wherein the inlet line for steam is connected with the bottom section of the distillation column.

11. The plant in accordance with any of the preceding claims, which further comprises a reboiler, wherein the lower portion of the top section comprises an outlet line and in inlet line, both being connected with a recycle line leading from the outlet line to the inlet line, wherein the recycle line is connected with the reboiler.

12. The plant in accordance with any of the preceding claims, wherein a reboiler is arranged within the bottom section, wherein the reboiler is arranged at a position being located, seen from the bottom to the top of the bottom section of the distillation column, between 5 and 50% and preferably between 10 and 30% of the distance from the bottom to the top of the bottom section.

13. The plant in accordance with any of the preceding claims, wherein the steam generating unit comprises a steam generator and a solvent regenerator, wherein the steam generator comprises an inlet being connected with a water line and an outlet for steam, wherein the solvent regenerator comprises an inlet being connected with the outlet for steam of the steam generator, a further inlet line being connected with a solvent line being connected with the bottom outlet line of the distillation column and an outlet being connected with the inlet line for steam of the distillation column.

14. A method for separating and purifying styrene from a crude mixture comprising styrene comprising the steps of:
a) feeding a crude hydrocarbon composition containing styrene via the inlet line for feed, feeding an extractive solvent via the inlet line for extractive solvent and feeding an extractive solvent and water steam comprising mixture via the inlet line for steam into the distillation column of a plant in accordance with any of the preceding claims,
b) distilling the crude hydrocarbon composition, the extractive solvent and the water steam in the distillation column,
c) withdrawing an overhead stream via the overhead outlet line of the distillation column,
d) withdrawing a styrene enriched composition via the side outlet line of the distillation column,
e) leading the overhead stream directly or a aqueous stream being obtained by subjecting the overhead stream to a condensation and thereafter subjecting the condensed overhead stream to a liquid-liquid separation so as to separate it into the aqueous stream and into a hydrocarbon stream, into the liquid-liquid extraction wash column,
f) leading the styrene enriched composition directly or a hydrocarbon stream being obtained by subjecting the styrene enriched composition to a condensation and thereafter subjecting the condensed stream to a liquid-liquid separation so as to separate it into the aqueous stream and into a hydrocarbon stream, into the liquid-liquid extraction wash column, and
g) withdrawing from the liquid-liquid extraction wash column a pure styrene stream.

15. The method in accordance with claim 14, wherein the crude hydrocarbon composition contains 10 to 80% by weight, preferably 30 to 60% by weight and more preferably 40 to 50% by weight of styrene, wherein the crude hydrocarbon composition is preferably selectivelyhydrotreated hydrocarbon C8 cut.
